# EUROPEAN PATENT APPLICATION

(11) **EP 4 611 246 A1**
(43) Date of publication of application: **03.09.2025**
(21) Application number: 23911509.0
(22) Date of filing: 29.11.2023
(51) Int. Cl.: H02M 7/48

(54) **INVERTER, INVERTER CONTROL METHOD, AND PROGRAM**

(30) Priority: 27.12.2022 JP 2022210826
(71) Applicant: OMRON Corporation, Kyoto 600-8530 (JP)
(72) Inventor: ZHAO, Qian, Kyoto-shi, Kyoto 600-8530 (JP)
(74) Representative: Isarpatent
(86) International application number: PCT/JP2023/042652
(87) International publication number: WO 2024/142728

(57) **Abstract**

An inverter converts DC power into three-phase AC power using a power conversion circuit with three legs, each corresponding to a phase. Each leg contains two switching elements. A controller manages switching control of these elements based on a PWM modulation method to regulate power conversion and output. The controller generates a PWM modulation signal to sequentially modulate only two of the three phases. For one phase, both switching elements in its leg undergo modulation. For another phase, only one switching element in its leg is modulated while the other is fixed to OFF. For the remaining phase, the switching elements in its leg are fixed to complementary ON or OFF states. This method ensures efficient and sequential control of power conversion across the three phases.

## Description

### TECHNICAL FIELD

The present invention relates to an inverter, a control method for an inverter, and a program.

### BACKGROUND OF INVENTION

In the related art, in an inverter for converting DC power into three phase AC power and outputting the three phase AC power, a PWM modulation method is known in which the DC power is converted into an AC waveform and is output by changing a switching pulse width (duty cycle) of a switching element such as a transistor. Since a switching loss occurs when the switching element performs a switching operation, it is desirable that the number of switches each performing switching control is small in order to perform highly efficient output control.

In this regard, in the PWM modulation method, a control method called two phase modulation is conventionally known in which a switching element of one phase of three phases is fixed to ON or OFF and switching elements of the remaining two phases are caused to perform switching operation (that is, the number of switches each simultaneously performing the switching control is four) (for example, Patent Document 1). In such a method, switching loss corresponding to two switches can be reduced as compared with a control method of three phase modulation.

In addition, a control method has also been proposed in which the number of switches each performing the switching control is further reduced and the switching control is performed on only one phase of the three phases (Non-Patent Documents 1 and 2).

### CITATION LIST

### PATENT LITERATURE

Patent Document 1: JP H07-46855 A

### NON-PATENT LITERATURE

Non-Patent Document 1: Hideaki Fujita "A Single-Phase Switching Method for Three-Phase AC-Interfaced Converters", The Institute of Electrical Engineers of Japan, Technical Meeting 2007, vol. 4, No. 078, p. 118 to 119
Non-Patent Document 2: Hideaki Fujita, Ryo Suzuki, "A Three-Phase Solar power Conditioner Using a Single-Phase PWM Control Method", The Institute of Electrical Engineers of Japan, Journal D, (Journal of Industry Applications), 2010, Vol. 130, No. 2, p. 173 to 180

### SUMMARY

### TECHNICAL PROBLEM

According to the techniques described in Non-Patent Documents 1 and 2, although the switching loss associated with the switching control can be reduced as compared with the known control method of the two phase modulation, only an output voltage (current) waveform can be controlled by the inverter circuit alone, and there is a problem that it is necessary to provide a DC-DC converter circuit in the preceding stage in order to control a voltage value and a current value.

The present invention has been made in view of the above-described circumstances, and an object of the present invention is to provide an inverter that can reduce the switching loss as compared with a known inverter.

### SOLUTION TO PROBLEM

To solve the problem described above, an aspect of the present invention employs the following configuration. That is, an inverter for converting DC power into three phase AC power and outputting the three phase AC power, the inverter including a power conversion circuit including three legs corresponding to three phases, respectively, each of the three legs including two switching elements, and a controller for performing switching control on each of the switching elements to control the conversion and the output based on a PWM modulation method, wherein the controller
generates a PWM modulation signal for sequentially modulating only two phases of the three phases by performing the switching control on both of the two switching elements included in one of the three legs for any one of the three phases, performing the switching control on only one of the two switching elements included in another one of the three legs and fixing another switching element to OFF for another one of the three phases, and fixing the two switching elements included in a remaining one of the three legs to complementarily ON or OFF for a remaining one of the three phases.

The "leg" refers to one set of two arms including switching elements connected to each other in series between a positive electrode side and a negative electrode side of a DC (that is, input) side of the power conversion circuit. The "complementary" means that when one is ON, the other is OFF. According to the above-described configuration, by using the same power conversion circuit (switching circuit) as that conventionally employed, the switching elements each performing the switching control at the same time can be reduced by one as compared with a known two phase modulation method, and the switching loss can be reduced.

The switching element is a MOSFET, and in the other one the three legs in which the one of the two switching elements is subjected to the switching control and the other switching element is fixed to OFF, while the one of the switching elements subjected to the switching control is OFF, a current may be allowed to pass through a body diode of the other of the switching elements fixed to OFF. However, it is not necessary to pass the current through the body diode, and the current can be passed by a method described later. According to this configuration, the power conversion circuit can be configured by using a MOSFET that is generally employed as the switching element, which is preferable.

Further, the power conversion circuit may include a diode disposed in parallel with at least one of the two switching elements included in each of the three legs. With such a configuration, even when the switching element is not limited to the MOSFET, when the switching element is fixed to OFF, the current can be passed through the diode disposed in parallel. Even when the MOSFET is used, since conduction loss occurs in the body diode. the conduction loss can be reduced by disposing the diode having a further lower resistance in parallel to pass the current through the diode.

Further, the present invention can be grasped as follows. That is, a control method for an inverter, the inverter including a power conversion circuit including three legs each including two switching elements, and the inverter being configured to convert DC power into three phase AC power and output the three phase AC power using the power conversion circuit, the control method including
performing PWM modulation for sequentially modulating only two phases of three phases by performing the switching control on both of the two switching elements included in one of the three legs for any one of the three phases, performing the switching control on only one of the two switching elements included in another one of the three legs and fixing another switching element to OFF for another one of the three phases, and fixing the two switching elements included in a remaining one of the three legs to complementarily ON or OFF for a remaining one of the three phases.

Another aspect of the present invention is also a program for causing a processor to execute the control method described above and a computer-readable storage medium for storing the program in a non-transitory manner.

### ADVANTAGEOUS EFFECTS OF INVENTION

According to the present invention, an inverter that can reduce a switching loss as compared with the related art can be provided.

### BRIEF DESCRIPTION OF THE DRAWINGS

FIG. 1 is a schematic diagram schematically illustrating a configuration of an inverter according to a first embodiment.
FIG. 2 is an explanatory diagram illustrating a relationship between a reference signal and a control state of each switching element in a known two phase modulation method.
FIG. 3 is an explanatory diagram illustrating a relationship between a reference signal and a control state of each switching element in a modulation method according to the first embodiment.
FIG. 4 is a block diagram illustrating a hardware configuration of a controller according to the first embodiment.
FIG. 5 is a first explanatory diagram illustrating a relationship between ON/OFF of a switching element and a flow of a current when attention is paid to a U-phase.
FIG. 6 is a second explanatory diagram illustrating the relationship between ON/OFF of the switching element and the flow of the current when attention is paid to the U-phase.
FIG. 7 is a schematic diagram schematically illustrating a configuration of an inverter according to a first modified example.
FIG. 8 is an explanatory diagram illustrating timing of switching control according to the first modified example.
FIG. 9 is a schematic diagram schematically illustrating a configuration of an inverter according to a second embodiment.
FIG. 10 is an explanatory diagram illustrating timing of switching control according to the second modified example.
FIG. 11 is a schematic diagram schematically illustrating a configuration of an inverter according to a third modified example.
FIG. 12 is an explanatory diagram illustrating timing of switching control according to the third modified example.

### DESCRIPTION OF EMBODIMENTS

### <Application Example>

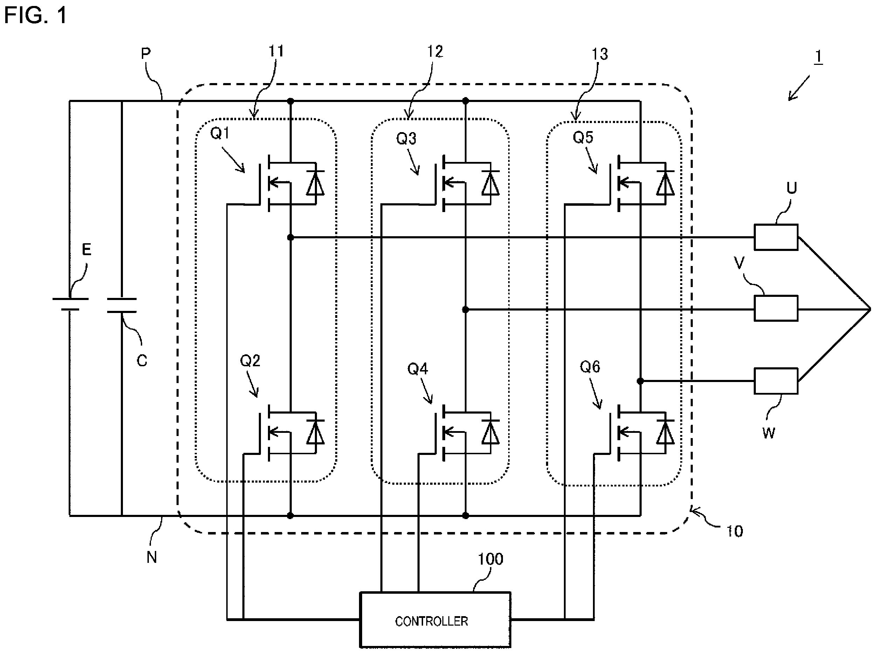

An example of an embodiment of the present invention will be described below. The present invention can be applied to an inverter 1 as illustrated in FIG. 1. FIG. 1 is a schematic diagram schematically illustrating a configuration of the inverter 1.

As illustrated in FIG. 1, the inverter 1 includes a positive bus P and a negative bus N each connected to a DC power supply E via a capacitor C, a U-phase output end U, a V-phase output end V, and a W-phase output end W each for outputting AC power, a power conversion circuit 10, and a controller 100. An application of the inverter 1 is not particularly limited, and for example, the inverter 1 may be incorporated in electric equipment to supply output power to a load such as an AC motor, or may be used in a Power Conditioning Subsystem (PCS).

The power conversion circuit 10 includes six switching elements Q1, Q2, Q3, Q4, Q5, and Q6. In the present application example, as each switching element, a Metal-Oxide-Semiconductor Field Effect Transistor (MOSFET) is employed. In the power conversion circuit 10, a switching element Q1 constituting a U-phase upper arm and a switching element Q2 constituting a U-phase lower arm are connected to each other in series between the positive electrode bus P and the negative electrode bus N to constitute a U-phase leg 11. Further, a switching element Q3 constituting a V-phase upper arm and a switching element Q4 constituting a V-phase lower arm are connected to each other in series between the positive electrode bus P and the negative electrode bus N to constitute a V-phase leg 12. Further, a switching device Q5 constituting a W-phase upper arm and a switching device Q6 constituting a W-phase lower arm are connected to each other in series between the positive electrode bus P and the negative electrode bus N to constitute a W-phase leg 13. As illustrated in FIG. 1, a portion between the switching elements Q1 and Q2 is connected to a U-phase output end, a portion between the switching elements Q3 and Q4 is connected to a V-phase output end, and a portion between the switching elements Q5 and Q6 is connected to a W-phase output end.

The controller 100 is a computer including a storage medium for storing a control program and a processor such as a Central Processing Unit (CPU) for executing a control procedure in accordance with the control program. The controller 100 controls each configuration of the inverter by using various sensors (not illustrated) installed in each unit such as an input end and an output end of the inverter 1 and various information obtained from the outside via a communication line (not illustrated).

The controller 100 controls the switching elements Q1 to Q6 of the power conversion circuit 10 in order to convert DC power supplied from the DC power supply E into AC power and output the AC power from the U-phase output end U, the V-phase output end V, and the W-phase output end W. More specifically, for each of the U-phase leg 11, the V-phase leg 12, and the W-phase leg 13, a Pulse Width Modulation (PWM) signal is generated using a reference signal indicating a desired AC output waveform and a predetermined carrier wave (triangular wave), and the switching control is performed on each switching element based on the PWM modulation signal. Since Direct Current (DC)/Alternating Current (AC) conversion based on the PWM modulation method is a widely known technique, detailed description thereof will be omitted.

Among the PWM modulation methods, two types of modulation methods, that is, a three phase modulation method and a two phase modulation method, are conventionally well known. The three phase modulation method is a method in which the switching control is always performed on all the switching elements of the U-phase leg 11, the V-phase leg 12, and the W-phase leg 13 during one cycle (360°) of a sine wave. On the other hand, the two phase modulation method is a method in which a section in which the switching element of the leg corresponding to each of the U-phase, V-phase, and W-phase is fixed to ON or OFF and the switching control is not performed is provided by 120° in one cycle, and the section in which the control is not performed is sequentially alternated between the phases. According to the two phase modulation method, since the number of elements each performing the switching control is always reduced by two as compared with the three phase modulation method, the switching loss can be reduced.

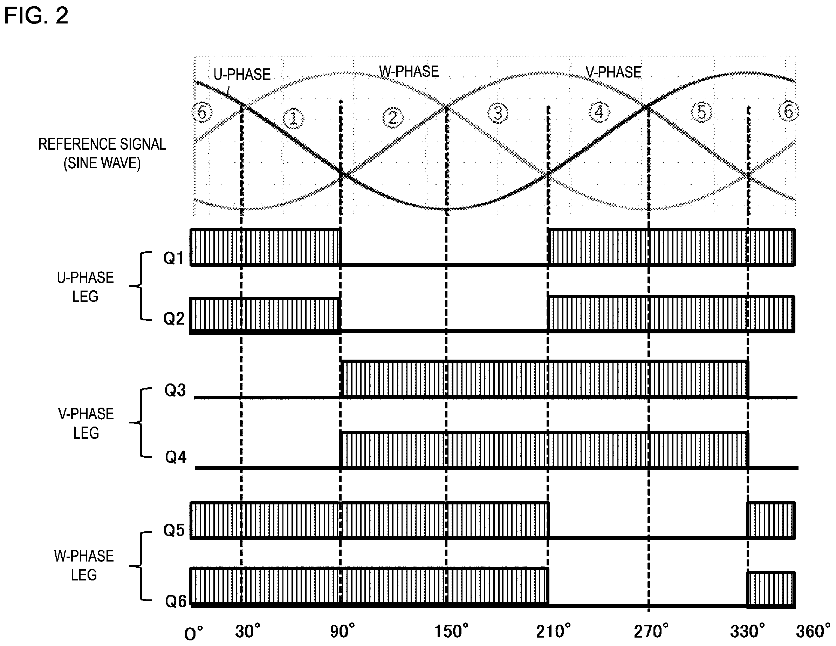

FIG. 2 is an explanatory diagram illustrating a relationship between a reference signal (sine wave) of each phase and a control state of each switching element when the switching control of the two phase modulation method is performed. As illustrated in FIG. 2, one cycle of the sine wave is divided into six sections, and each section is indicated by a respective one of circled numbers 1 to 6. In the drawing, a section in which a bar with vertical hatching is illustrated is a section in which the switching control is performed, and a section in which the bar is not illustrated is a section in which the switching control is not performed. As illustrated in FIG. 2, it can be seen that in a section in which a position of the sine wave indicated by the reference signal in each phase is lower than the sine wave of the other phase, the switching control of the phase is not performed.

The inverter 1 according to the present application example is characterized in that the number of switching elements each performing the switching control is reduced by one to three. Specifically, during one cycle of the sine wave, the controller 100 generates a PWM modulation signal for sequentially modulating only two phases of three phases by performing the switching control on both of the two switching elements included in one of the legs for one phase of the three phases, performing the switching control on only one of the two switching elements included in another one of the legs for one of the other two phases and fixes the other to OFF, and fixing the two switching elements included in a remaining leg to complementarily ON or OFF for a remaining phase.

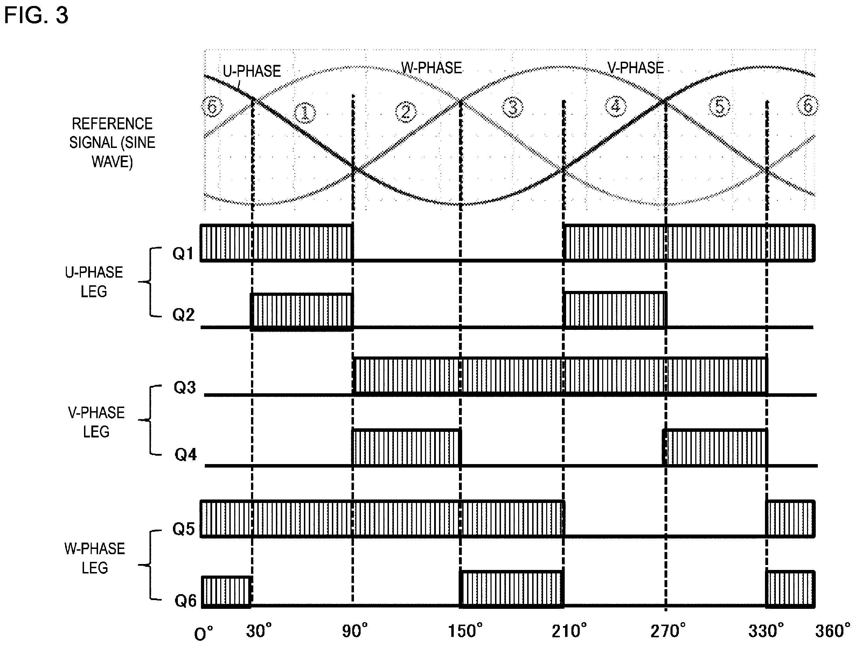

Similar to FIG. 2, FIG. 3 illustrates a relationship between a reference signal (sine wave) of each phase and a control state of each switching element when the switching control by the inverter 1 according to the present application example is performed. As illustrated in FIG. 3, in the PWM modulation according to the present application example, it can be seen that, in addition to the case of the two phase modulation method, a section in which the switching control is not performed is further added by 120° with respect to the switching elements Q2, Q4, Q6 belonging to the lower arms for each phase.

Here, in the present application example, it can be seen that in each leg corresponding to a respective one of the phases (for example, the U-phase leg), the switching control is performed on the switching element belonging to the upper arm (for example, Q1) in the section of 120° corresponding to 1/3 of one cycle (for example, the sections 5 and 6), but the switching control is not performed on the switching element belonging to the lower arm (for example, Q2). During this time, the switching element belonging to the lower arm is fixed to OFF.

In this case, when the U-phase leg 11 is described as an example, at the timing at which the switching element Q1 is turned OFF by the switching control, the switching element Q2 is fixed to OFF, but a current can be passed through the body diode of the MOSFET, so that the current of the negative bus N can flow back through the body diode of the switching element Q2.

According to the inverter 1 of the present application example as described above, the number of switching elements each always performing the switching control can be reduced to only three of the six. As a result, the switching loss can be reduced even with the same circuit configuration as that of the inverter based on the known PMW modulation method.

### <First Embodiment>

Subsequently, an example of an embodiment of the present invention will be described in more detail. The inverter 1 according to the present embodiment is mounted on, for example, a PV-PCS and converts DC power output from a solar cell as the DC power supply E into three phase AC power synchronized with a commercial power system and outputs the three phase AC power. Since the inverter 1 according to the present embodiment has the same configuration as that described in the application example, detailed description of the configuration already described will be omitted.

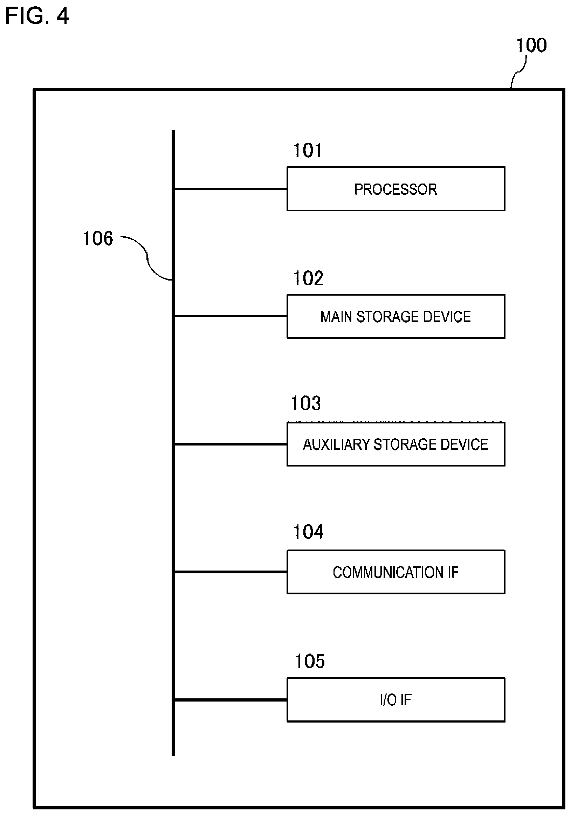

FIG. 4 is a diagram illustrating a hardware configuration of the controller 100 of the inverter 1 according to the present embodiment. As illustrated in FIG. 4, the controller 100 is a computer including, as components, a processor 101, a main storage device 102, an auxiliary storage device 103, a communication IF 104, and an I/O IF 105 which are connected to each other by a connection bus 106. The main storage device 102 and the auxiliary storage device 103 are recording media readable by the controller 100. A plurality of the above-described components may be provided, or some of the components need not be provided.

The processor 101 is a central processing unit for controlling the entire controller 100. The processor 101 is, for example, a CPU, a, Micro-Processing Unit (MPU), a Digital Signal Processor (DSP), or the like. For example, the processor 101 provides functions meeting predetermined purposes by loading programs stored in the auxiliary storage device 103 into a work area of the main storage device 102 to cause the programs to be executable, and controlling peripheral equipment through execution of the programs. However, some or all of the functions provided by the processor 101 may be provided by an Application Specific Integrated Circuit (ASIC), a Graphics Processing Unit (GPU), or the like. Similarly, some or all of the functions may be achieved by dedicated large scale integration (LSI) such as a field-programmable gate array (FPGA) or a numerical processor, or any other hardware circuit.

The main storage device 102 and the auxiliary storage device 103 constitute a memory of the controller 100. The main storage device 102 stores programs executed by the processor 101, data processed by the processor, and the like. The main storage device 102 includes a flash memory, a Random Access Memory (RAM), and a Read Only Memory (ROM). The auxiliary storage device 103 is a storage medium for storing programs executed by the processor 101 and the like, operation setting information, and the like. The auxiliary storage device 103 includes, for example, a Hard-disk Drive (HDD), a Solid State Drive (SSD), an Erasable Programmable ROM (EPROM), a flash memory, a USB memory, a Secure Digital (SD) memory card, or the like. The communication IF 104 is a communication interface to a communication network. The communication IF 104 can employ an appropriate configuration in accordance with a scheme for connection to the communication network N to be connected.

The I/O IF 105 is an interface for inputting and outputting information to and from an input device and an output device included in the inverter 1. The data is output to an output device such as a display device such as an LCD through the I/O IF 105. In addition, an operation instruction is received through the I/O IF 105, and processing intended by the user is performed based on the operation instruction.

The control unit 100 as described above generates the PWM modulation signal for performing the switching control on the switching elements Q1 to Q6 of the power conversion circuit 10. Specifically, a reference signal (sine wave) indicating an AC output waveform is compared with a predetermined carrier signal (triangular wave) for each of the U-phase, the V-phase, and the W-phase to generate a pulse waveform for switching ON/OFF of each of the switching elements belonging to the upper arm and the switching elements belonging to the lower arm.

The basic method of generating such a PWM modulation signal is the same as that in the case of the known three phase modulation method. That is, when attention is paid to the switching element of the upper arm of the leg, a pulse wave is generated which is ON when a value of the reference signal is higher than a value of the carrier signal and is OFF when the value of the reference signal is lower than the value of the carrier signal. On the other hand, when attention is paid to the switching element of the lower arm of the leg, a pulse wave is generated which is OFF when a value of the reference signal is higher than a value of the carrier signal and is ON when the value of the reference signal is lower than the value of the carrier signal.

However, in the inverter 1 according to the present embodiment, a section in which the switching control is not performed on each switching element exists by 120° or 240° per one cycle of the sine wave. That is, in the present embodiment, the PWM modulation signal generated by the controller 100 is a pulse signal for controlling the switching element so as to be in a predetermined open/close state regardless of a magnitude relationship between the reference signal and the carrier signal in a section in which such a switching control is not performed.

For example, when the switching elements Q1 and Q2 of the U-phase leg illustrated in FIG. 3 are taken as an example, in the sections 1 and 4, a pulse signal as usual (that is, based on the magnitude relationship between the reference signal and the carrier signal) is generated. On the other hand, in the sections 2 and 3, a pulse signal is generated such that the switching element Q1 is always OFF and the switching element Q2 is always ON. In the sections 5 and 6, a pulse signal based on the magnitude relationship between the reference signal and the carrier signal is generated as usual for the switching element Q1, but a pulse signal in which the switching element Q2 is always OFF is generated.

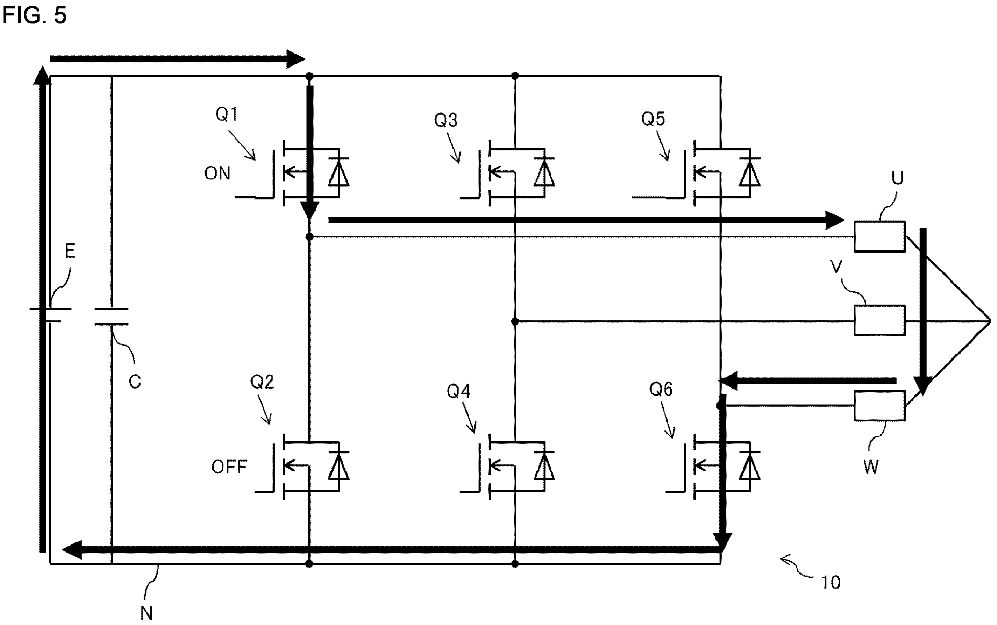

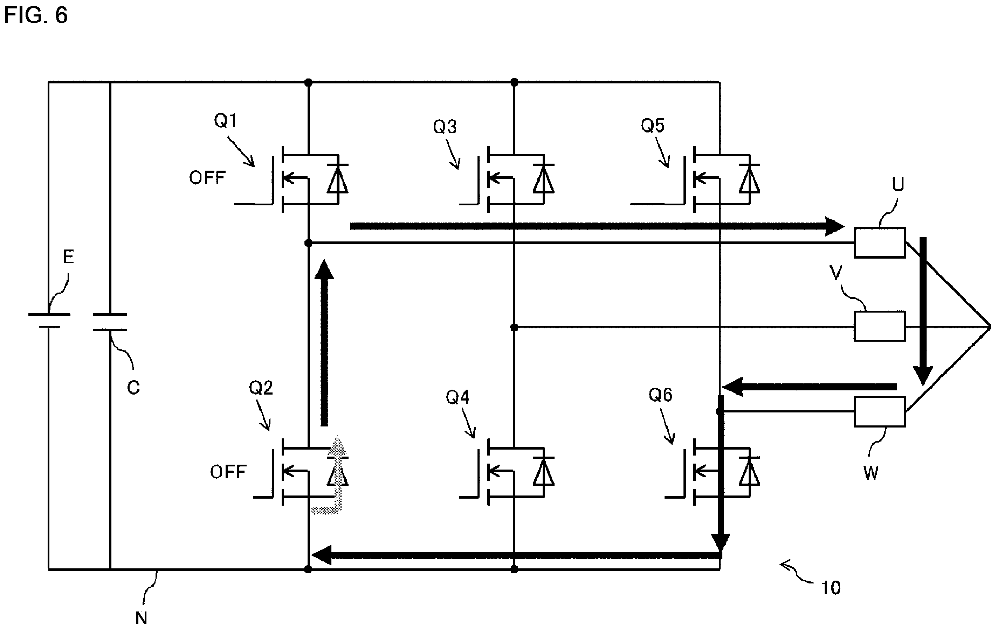

FIGS. 5 and 6 illustrate the ON/OFF states and the flows of currents when attention is paid to the switching elements Q1 and Q2 of the U-phase leg 11 in the sections 5 and 6 of FIG. 3. In FIGS. 5 and 6, unnecessary elements are omitted in order to simplify the description of the flows of the currents according to the switching elements Q1 and Q2.

FIG. 5 is an explanatory diagram illustrating the flow of the current when the switching element Q1 is ON and the switching element Q2 is OFF in the sections 5 and 6. As illustrated in FIG. 5, when the switching element Q1 is ON and the switching element Q2 is OFF, the DC current supplied via the capacitor C flows through the switching element Q1 to the U-phase leg 11 and a voltage is applied to the U-phase output end U.

FIG. 6 is an explanatory diagram illustrating the flow of the current in a state where the switching element Q1 is turned OFF from the state illustrated in FIG. 5. Since the switching element Q2 is the MOSFET and includes the body diode, even when the switching element Q2 is not ON, the current of the negative bus N can flow back through the body diode of the switching element Q2 as illustrated in FIG. 6.

According to the inverter 1 of the present embodiment, substantially the same modulation as the two phase modulation method can be performed while the number of switching elements each always performing the switching control is reduced to three. As a result, the switching loss can be reduced by 25% even with the same circuit configuration as that of the inverter based on the known PMW modulation method. In addition, since there is only one leg of the three legs in which both the upper and lower arms perform the switching control, the risk that the upper and lower arms are shortcircuited can be reduce, and an influence of dead time can be further reduced. In addition, since the number of switching elements each performing the switching control at the same time can be reduced to three, a load related to the calculation can be reduced.

### <Modified Example>

In the first embodiment described above, when the switching control is performed on only one of the switching elements of legs, the current flows back via the body diode of the other switching element at a timing at which any one of the switching elements is OFF. However, this configuration is not necessarily required. Also in the generation of the PWM modulation signal, the signal to be compared with the carrier signal need not be the predetermined reference signal but may be a value of an output voltage (current) detected at the output end of each phase. Such a modified example will now be described below.

### (First Modified Example)

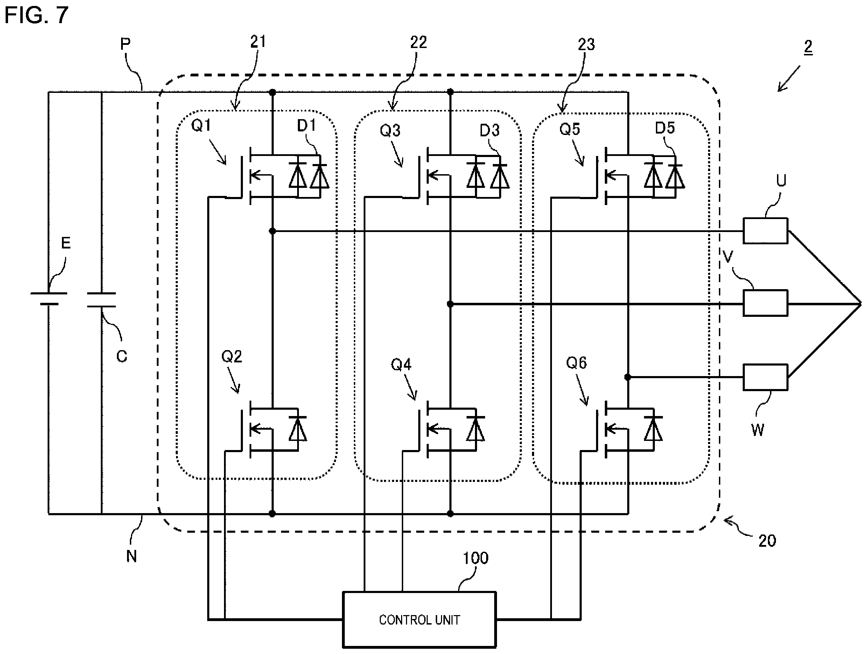

FIG. 7 is a schematic diagram schematically illustrating a configuration of an inverter 2 according to a first modified example. Since each modified example described below has substantially the same configuration as that of the inverter 1 of the first embodiment, the same components are denoted by the same reference numerals and signs and redundant description will be omitted.

The inverter 2 is different from the inverter 1 in the configuration of a power conversion circuit 20. Specifically, diodes D1, D3, and D5 each having a low resistance are provided in the upper arms of the U-phase leg 21, the V-phase leg 22, and the W-phase leg 23, respectively. As illustrated in FIG. 7, the diode D1, the diode D3, and the diode D5 are disposed in parallel with the switching element Q1, the switching element Q3, and the switching element Q5, respectively.

When the current flows back through the body diode of the MOSFET, a certain conduction loss occurs. Thus, the loss can be reduced by disposing the diode having a low resistance in parallel with the switching element and causing the current to flow back through the diode having the low resistance.

Although a plurality of methods can be considered for generating the PWM modulation signal by the two phase modulation, the configuration of the inverter 2 according to the first modified example is suitable for a method of stopping the switching control in the section of 120° in which the reference signal is a maximum as compared with the other phases in each of the U-phase, the V-phase, and the W-phase. In each modified example including the present modified example, the output voltage value in each phase is used as the reference signal for generating the PWM modulation signal.

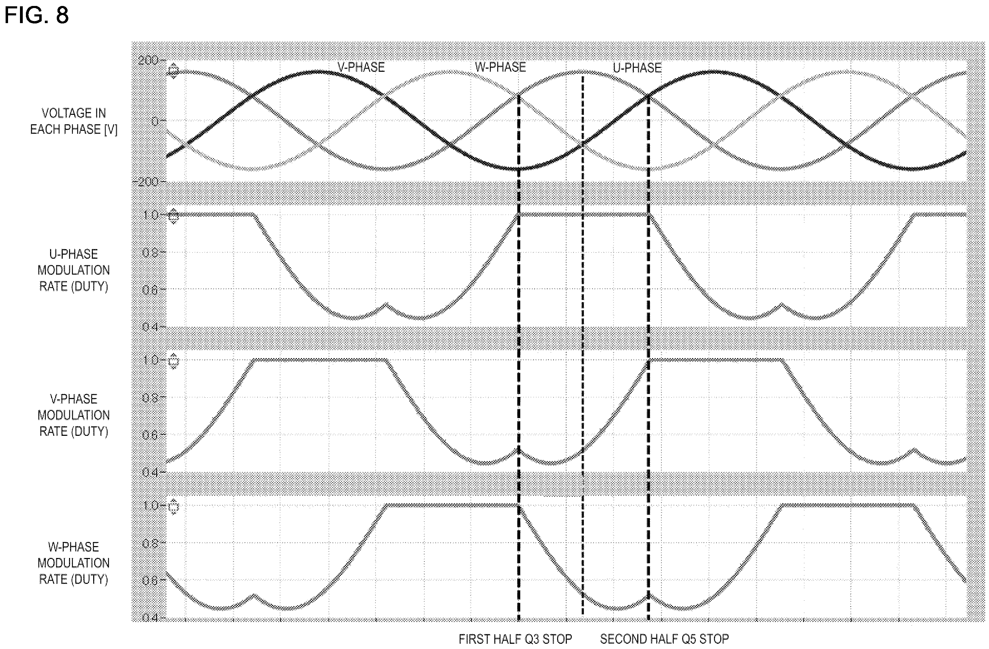

FIG. 8 is a diagram for explaining the switching control when such a modulation method is performed. As illustrated in FIG. 8, for example, in a section in which the reference signal of the U-phase is a maximum (that is, larger than the other two phases), the switching control of the U-phase leg 21 is stopped, the switching element Q1 is fixed to ON, and the switching element Q2 is fixed to OFF. During this period, the switching element of the upper arm corresponding to the phase that outputs the minimum voltage is fixed to OFF (switching control is stopped). Specifically, the switching element Q3 of the V-phase leg 22 is fixed to OFF for the first half 60°, and the switching element Q5 of the W-phase leg 23 is fixed to OFF for the second half 60°.

That is, in the case of a modulation method of stopping the switching control in the section of 120° in which the reference signal is the maximum as compared with the other phases in each of the U-phase, the V-phase, and the W-phase, the switching element of the upper arm is fixed to OFF. Thus, the configuration of the present modified example in which diodes each having a low resistance are disposed in parallel with these switching elements is preferable.

### (Second Modified Example)

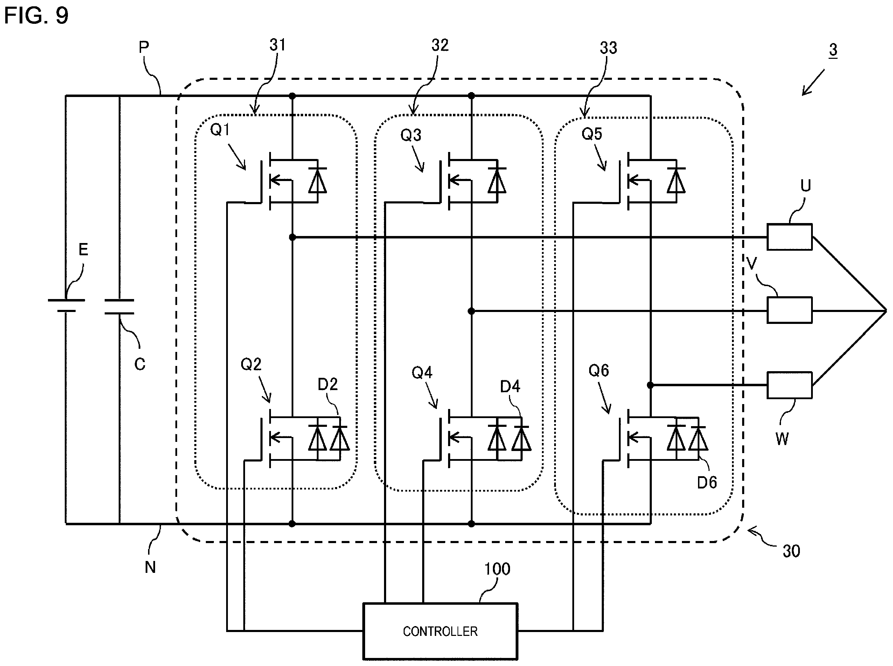

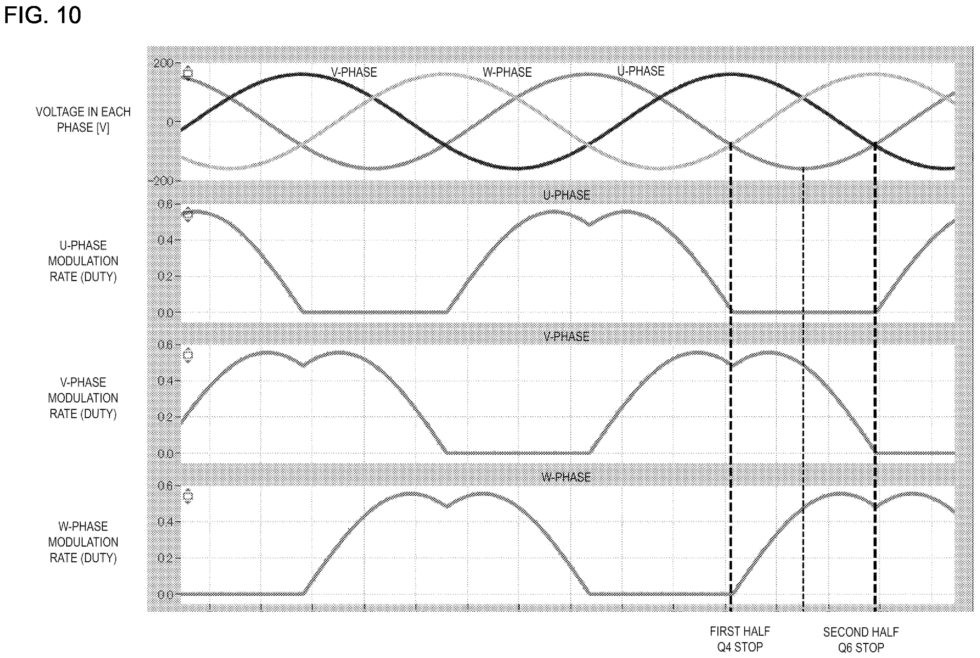

Next, a second modified example will be described with reference to FIGS. 9 and 10. As illustrated in FIG. 9, an inverter 3 according to the present modified example.is different from the inverter 1 in the configuration of a power conversion circuit 30. Specifically, the diodes D2, D4, and D6 each having a low resistance are provided in the lower arms of the U-phase leg 31, the V-phase leg 32, and the W-phase leg 33, respectively. As illustrated in FIG. 9, the diode D2, the diode D4, and the diode D6 are disposed in parallel with the switching element Q2, the switching element Q4, and the switching element Q6, respectively.

Such a configuration of the present modified example is suitable for a method of stopping the switching control in the section of 120° in which the reference signal is a minimum as compared with other phases in each of the U-phase, the V-phase, and the W-phase. FIG. 10 is a diagram for explaining the switching control when such a modulation method is performed. As illustrated in FIG. 10, for example, in a section in which the reference signal of the U-phase is a minimum (that is, smaller than the other two phases), the switching control of the U-phase leg 31 is stopped, the switching element Q1 is fixed to OFF, and the switching element Q2 is fixed to ON. During this period, the switching element of the lower arm corresponding to the phase that outputs the maximum voltage is fixed to OFF (switching control is stopped). Specifically, the switching element Q4 of the V-phase leg 22 is fixed to OFF for the first half 60°, and the switching element Q6 of the W-phase leg 33 is fixed to OFF for the second half 60°.

That is, in the case of a modulation method of stopping the switching control in the section of 120° in which the reference signal is the minimum as compared with the other phases in each of the U-phase, the V-phase, and the W-phase, the switching element of the lower arm is fixed to OFF. Thus, the configuration of the present modified example in which diodes each having a low resistance are disposed in parallel with these switching elements is preferable.

### (Third Modified Example)

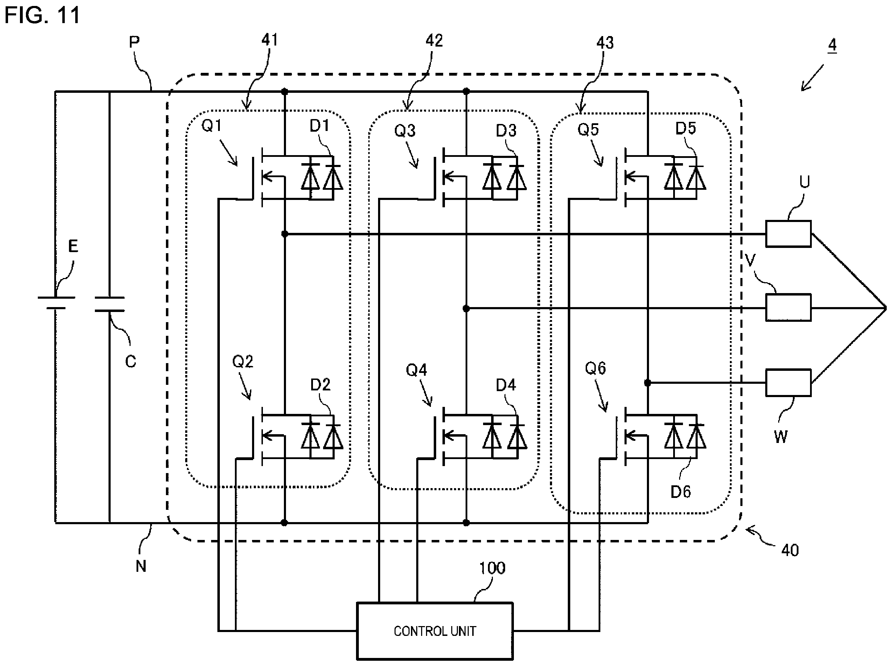

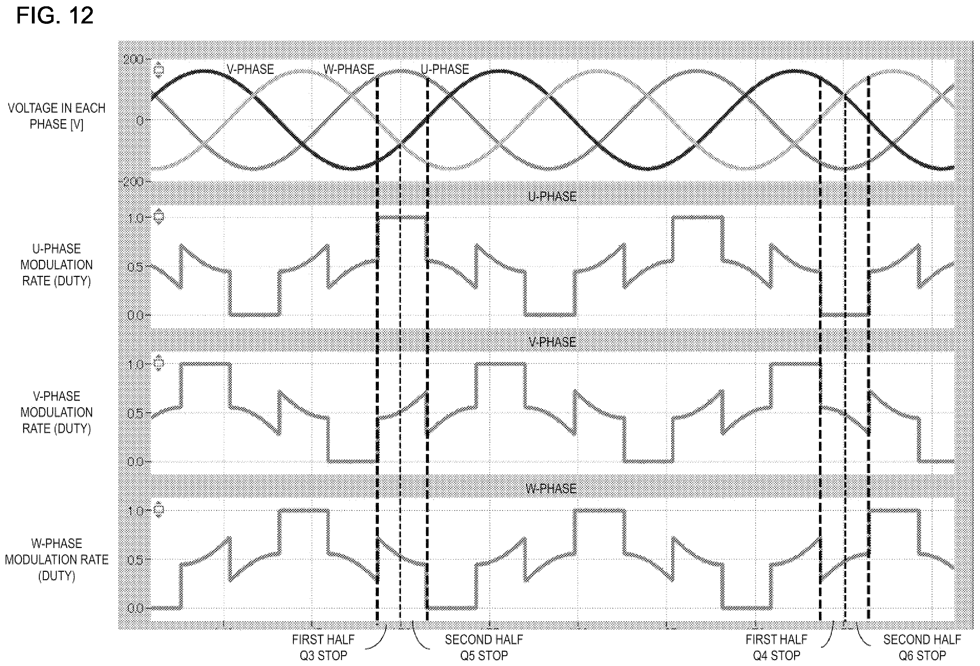

Next, a third modified example will be described with reference to FIGS. 11 and 12. As illustrated in FIG. 11, an inverter 4 according to the present modified example is different from the inverter 1 in the configuration of a power conversion circuit 40. Specifically, in each of a U-phase leg 41, a V-phase leg 42, and a W-phase leg 43, a diode is provided in parallel with any switching element. That is, the configuration is a combination of the first modified example and the second modified example.

Such a configuration of the present modified example is a configuration suitable for a method of stopping the switching control in each of a section of 60° in which the reference signal is the maximum and a section of 60° in which the reference signal is minimum in each of the U-phase, the V-phase, and the W-phase. FIG. 12 is a diagram for explaining the switching control when such a modulation method is performed.

As illustrated in FIG. 12, for example, in a section of 60° in which the reference signal of the U-phase is the maximum, the switching control of the U-phase leg 41 is stopped, the switching element Q1 is fixed to ON, and the switching element Q2 is fixed to OFF. During this period, the switching element of the upper arm corresponding to the phase that outputs the minimum voltage is fixed to OFF. Specifically, the switching element Q3 of the V-phase leg 42 is fixed to OFF for the first half 30°, and the switching element Q5 of the W-phase leg 43 is fixed to OFF for the second half 30°.

Also in a section of 60° in which the reference signal of the U-phase is the minimum, the switching control of the U-phase leg 41 is stopped, the switching element Q1 is fixed to OFF, and the switching element Q2 is fixed to ON. During this period, the switching element of the lower arm corresponding to the phase that outputs the maximum voltage is fixed to OFF. Specifically, the switching element Q4 of the V-phase leg 42 is fixed to OFF for the first half 30°, and the switching element Q6 of the W-phase leg 43 is fixed to OFF for the second half 30°.

That is, in the case where the PWM modulation signal is generated such that the phase in which the switching control is stopped is divided into sections of 60°, the configuration of the present modified example is preferable. In the present modified example, the section in which the switching control is stopped in each phase is set to 60° × 2 times. However, this section may be further subdivided into patterns such as 30° × 4 times and 15 ° × 8 times.

### <Others>

The examples described above are merely illustrative of the present invention, and the present invention is not limited to the specific modes described above. Various modifications and combinations are possible within the scope of the technical idea of the present invention. For example, although the MOSFET is used as the switching element in each of the above examples, a switching element other than the above, such as an Insulated Gate Bipolar Transistor (IGBT), may be used.

The application of the inverter according to the present invention is not particularly limited, and the inverter can be incorporated in a variety of equipment. As a matter of course, it is possible to provide a converter in the preceding stage of the inverter according to the present invention and DC power converted from AC to DC is to be converted.

### <Supplementary Note 1>

An inverter (1, 2, 3, 4) for converting DC power into three phase AC power and outputting the three-phase AC power, the inverter including a power conversion circuit (10, 20, 30, 40) including three legs (11, 12, 13, 21, 22, 23, 31, 32, 33, 41, 42, 43) corresponding to three phases, respectively, each of the three legs including two switching elements (Q1, Q2, Q3, Q4, Q5, Q6), and a controller (100) for performing switching control on each of the switching elements to control the conversion and the output based on a PWM modulation method, wherein the controller
generates a PWM modulation signal for sequentially modulating only two phases of the three phases by performing the switching control on both of the two switching elements included in one of the three legs for any one of the three phases, performing the switching control on only one of the two switching elements included in another one of the three legs and fixing another switching element to OFF for another one of the three phases, and fixing the two switching elements included in a remaining one of the three legs to complementarily ON or OFF for a remaining one of the three phases.

### <Supplementary Note 2>

A control method for an inverter (1, 2, 3, 4), the inverter including a power conversion circuit (10, 20, 30, 40) including three legs (11, 12, 13, 21, 22, 23, 31, 32, 33, 41, 42, 43) each including two switching elements (Q1, Q2, Q3, Q4, Q5, Q6), and the inverter being configured to convert DC power into three phase AC power and output the three phase AC power using the power conversion circuit, the control method including performing PWM modulation for sequentially modulating only two phases of three phases by performing the switching control on both of the two switching elements included in one of the three legs for any one of the three phases, performing the switching control on only one of the two switching elements included in another one the three legs and fixing another switching element to OFF for another one of the three phases, and fixing the two switching elements included in a remaining one of the three legs to complementarily ON or OFF for a remaining one of the three phases.

### REFERENCE SIGNS

1, 2, 3, 4 Inverter
10, 20, 30, 40 Power conversion circuit
11, 21, 31, 41 U-phase leg
12, 22, 32, 42 V-phase leg
13, 23, 33, 43 W-phase leg
100 Controller
E DC power supply
C Capacitor
P Positive electrode bus
N Negative electrode bus
U U-phase output end
V V-phase output end
W W-phase output end
Q1, Q2, Q3, Q4, Q5, Q6 Switching element
D1, D2, D3, D4, D5, D6 Diode

## Claims

1. An inverter configured to convert DC power into three phase AC power and output the three phase AC power, the inverter comprising:
a power conversion circuit including three legs corresponding to three phases, respectively, each of the three legs including two switching elements; and
a controller configured to perform switching control on each of the switching elements to control the conversion and the output based on a PWM modulation method, wherein
the controller generates a PWM modulation signal configured to sequentially modulate only two phases of the three phases
by performing the switching control on both of the two switching elements included in one of the three legs for any one of the three phases,
performing the switching control on only one of the two switching elements included in another one of the three legs and fixing another switching element to OFF for another one of the three phases, and
fixing the two switching elements included in a remaining one of the three legs to complementarily ON or OFF for a remaining one of the three phases.

2. The inverter according to claim 1, wherein,
the switching element is a MOSFET, and
in the other one the three legs in which the one of the two switching elements is subjected to the switching control and the other switching element is fixed to OFF, while the one of the two switching elements subjected to the switching control is OFF, a current is allowed to pass through a body diode of the other of the switching elements fixed to OFF.

3. The inverter according to claim 1 or 2, wherein
the power conversion circuit include a diode disposed in parallel with at least one of the two switching elements included in each of the three legs.

4. A control method for an inverter, the inverter including a power conversion circuit including three legs each including two switching elements, and the inverter being configured to convert DC power into three phase AC power using the power conversion circuit and output the three phase AC power, the control method comprising:
performing PWM modulation configured to sequentially modulate only two phases of three phases
by performing the switching control on both of the two switching elements included in one of the three legs for any one of the three phases,
performing the switching control on only one of the two switching elements included in another one of the three legs and fixing another switching element to OFF for another one of the three phases, and
fixing the two switching elements included in a remaining one of the three legs to complementarily ON or OFF for a remaining one of the three phases.

5. A program for causing a processor to execute the control method for the inverter according to claim 4.
